# EUROPÄISCHE PATENTSCHRIFT

(11) **EP 1 123 664 B1**
(45) Veröffentlichungstag und Bekanntmachung des Hinweises auf die Patenterteilung: **24.11.2004**
(21) Anmeldenummer: 00102712.7
(22) Anmeldetag: 09.02.2000
(51) Int. Cl.: A23N 17/00, B30B 11/22

(54) **Vorrichtung zum Konditionieren von Futtermitteln**
Device for conditioning of fodder
Dispositif pour le conditionnement du fourrage

(43) Veröffentlichungstag der Anmeldung: 16.08.2001
(73) Patentinhaber: Amandus Kahl GmbH & Co., 21465 Reinbek (DE)
(72) Erfinder: Behrmann, Joachim, D-21465 Wentorf (DE)
(74) Vertreter: Glawe, Delfs, Moll & Partner

(56) Entgegenhaltungen:
- DE-A- 19 714 713
- FR-A- 633 320
- FR-A- 2 658 393
- GB-A- 1 109 341

## Beschreibung

Die Erfindung betrifft eine *Vorrichtung zum Konditionieren von Futtermitteln und Futtermittelkomponenten wie Ölsaaten, Ölfrüchte, Leguminosesamen, Sojabohnen, Reiskleie usw. mittels Erwärmung, so daß sie in eine für das Tier besser annehmbare und verdaubare Form gebracht werden,* mit einem Gehäuse mit Materialeingang, Druckaufbau- und Entspannungszonen und einer durch Stoppbolzen unterbrochenen Schnecke, mit der das Material unter Druckaufbau gegen eine verengte Auslaßöffnung und aus dieser unter Entspannung herausgedrückt wird, wobei die Vorrichtung mit wenigstens einer plattenförmigen, verstellbaren, den Materialfluß hemmende Elemente aufweisenden Staueinrichtung versehen ist.

Mit einer vorbekannten Vorrichtung dieser Art (DE 197 14 713 A) wird das Futtermittel oder die Futtermittelkomponente mit der Schnecke vom Materialeingang zur Auslaßöffnung gefördert, wobei dieser Auslaß teilweise durch ein Verschlußelement verschlossen ist. Dadurch baut sich ein Druck des Materials auf. Außerdem wird das Material durch die Reibung erwärmt. Diese Erwärmung kann gegebenenfalls weiter gefördert werden, indem heißes Wasser oder insbesondere Wasserdampf zugeführt wird. Durch diese Erwärmung wird das Futtermittel konditioniert und in eine für das Tier besser annehmbare und verdaubare Form gebracht. In Sojabohnen werden z. B. gewisse Stoffe desaktiviert, die den Geschmack verschlechtern. Außerdem wird die mechanische Konsistenz des Futtermittels, das an der Auslaßöffnung schlagartig entspannt wird, in vorteilhafter Weise verändert.

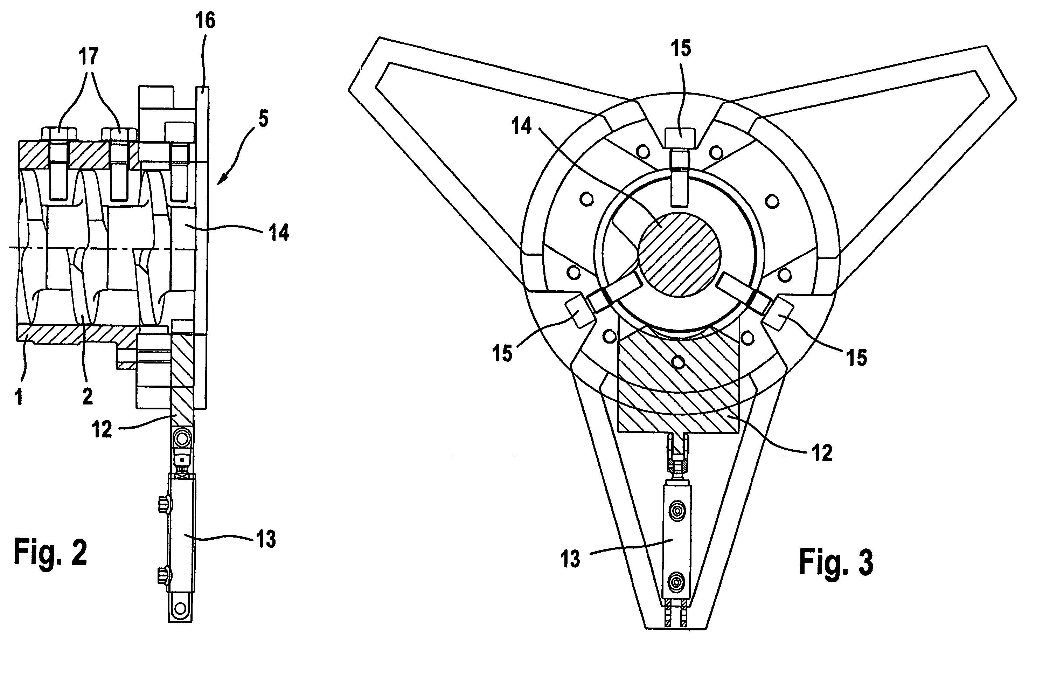

Insbesondere wenn Dampf zugegeben wird, besteht die Gefahr, daß dieser zum Materialeingang nutzlos entweicht, da hier das Futtermittel noch verhältnismäßig locker ist, während es zur Auslaßöffnung hin komprimiert ist und daher für Dampf kaum noch durchlässig ist. um dies zu verhindern, sind beim Stand der Technik zwischen Materialeingang und Auslaßöffnung im Bereich der Schnecke die Materialbewegung behindernde Elemente vorgesehen, um auch in diesen Zwischenbereichen schon einen Druckbereich, der durch Dampfzugabe aufgebaut wird, und ähnliche Verdichtung wie am Auslaßende zu erhalten. Dadurch soll wie gesagt das Austreten von Dampf zum Materialeingang und durch die Eingangsöffnung hindurch vermieden werden. Diese die Materialansammlung bewirkenden Elemente können bolzenförmig oder ein nabenartiger Wulst der Schneckenwelle sein. Gemäß Figur 3 der Entgegenhaltung sind aber auch plattenförmige Elemente vorgesehen, die den Querschnitt teilweise versperren. Um den Widerstand zu vermindern, können diese Platten um 90° gedreht werden, so daß ihre Ebene nicht mehr senkrecht zur Schneckenachse, sondern parallel mit derselben ist. Damit kann der Querschnitt aber nur unvollständig verschlossen werden. Sollen die Platten der Figur 3 um 90° gedreht werden, wie dies in der Beschreibung der Entgegenhaltung erwähnt ist, so muß die Unterfläche ganz offensichtlich eben und nicht wie in der Zeichnung gewölbt sein, da sonst die vorstehenden Enden der Unterfläche die Welle berühren würden. Außerdem ist eine Feinregelung nicht möglich. Schließlich muß im Bereich der plattenförmigen Elemente, damit diese um 90° gedreht werden können, so daß ihre Ebene parallel zur Schneckenachse ist, die Platten in der geschlossenen Stellung (Plattenebene senkrecht zur Schneckenachse) einen verhältnismäßig großen Abstand zu den Schneckenwindungen haben. Hier wird daher in der geschlossenen Stellung dauernd Material im Kreis herumbewegt, was einerseits zu einer unerwünschten großen Menge von Feinteilchen führt und andererseits auch zu übermäßiger Erhitzung und damit Verschlechterung des Futtermittels führen kann.

Am Ausgangsende ist beim Stand der Technik ein Konus vorgesehen, der gegen die Auslaßöffnung gedrückt werden kann, so daß nur ein Ringspalt zum Austreten des Materials verbleibt. Auch hier befindet sich, wie der Zeichnung zu entnehmen ist, zwischen Schneckenende und Auslaßöffnung ein Raum, in dem das Material unter Umständen eine unerwünscht lange Zeit herumbewegt wird, bevor es aus dem Ringspalt austritt.

Die Aufgabe der Erfindung besteht in der Schaffung einer Staueinrichtung, die sowohl im Bereich der Schnecke als auch an der Auslaßöffnung der Vorrichtung vorgesehen werden kann und mit der die Materialströmung auf besonders vorteilhafte weise gehemmt werden kann.

Die erfindungsgemäße Lösung besteht darin, daß die plattenförmigen Elemente der Staueinrichtung radial verschiebbar angeordnet sind und zur Schneckenwelle gerichtete Endflächen aufweisen, die an die Form der Schneckenwelle an dieser Stelle angepaßt sind.

Die plattenförmigen Elemente werden also nicht wie beim Stand der Technik gedreht, sondern verschoben. Sie können einerseits, da die Endflächen an die Wellenform angepaßt sind, sehr eng an die Wellen herangefahren werden, so daß nur ein sehr kleiner Zwischenraum verbleibt, durch den das Material hindurchtreten kann. Sie können aber auch ganz oder teilweise aus dem Bereich der Schnecke herausgefahren werden, um so den Materialdurchgang zu erleichtern. Da mehr als ein plattenförmiges Element vorgesehen ist, können diese auch getrennt voreinander verschoben werden. Auf diese Weise könnte eine Feinregulierung vorgenommen werden, indem nur eines von mehreren der plattenförmigen Elemente verschoben wird. Da die plattenförmigen Elemente in einer Ebene senkrecht zur Schneckenachse ausgerichtet sind und verschiebbar sind, können sie sehr nahe an den Enden der Schneckenwindungen angeordnet sein, so daß hier nur ein sehr kleiner Raum existiert, in dem das Material in unerwünschter Weise einige Zeit herumbewegt werden könnte. Dadurch wird in signifikanter weise die Menge der Feinteilchen verringert. Auch wird Überhitzung verhindert, was ebenfalls Verschlechterung des Futtermittels bewirken würde.

Es ist zwar bekannt, die gesamte Öffnung durch eine einzige Platte in der Art eine Guillotine zu verschließen (Heribert Unger, Expander mit Scheibenkopf, Die Mühle + Mischfuttertechnik, 134. Jahrgang, Heft 24, 20.11.1997, Seiten 774/775). Bei dieser Anordnung findet aber eine unsymmetrische Abgabe des Materials mehr oder weniger nur an einer Randstelle statt. Dabei besteht die Gefahr, daß am Ende der Schneckenwelle das Material längere Zeit verbleibt und nur außen liegendes Material nach außen gefördert wird, so daß hier eine Überhitzung des Materials stattfindet.

Eine erfindungsgemäße Ausführungsform zeichnet sich dadurch aus, daß eine Staueinrichtung an der Auslaßöffnung anstelle des Konus des Standes der Technik vorgesehen ist. Auf diese Weise kann ein Futtermittel erhalten werden, das sich durch besonders wenige Feinteile auszeichnet und das eine hohe Qualität ohne die Gefahr lokaler Überhitzung hat.

Es können aber auch eine oder mehrere Staueinrichtungen zwischen Materialeingang und Auslaßöffnung vorgesehen sein, durch die wie beim Stand der Technik das Austreten von Dampf durch den Materialeingang verhindert werden kann, wenn Dampf zugeführt wird. Gleichzeitig wird dadurch aber auch der Energieeintrag erhöht. Dem Material wird mehr Energie zugeführt, so daß es schneller erwärmt wird, wodurch die Durchgangsgeschwindigkeit erhöht werden kann.

Erstaunlicherweise hat sich gezeigt, daß mit der erfindungsgemäßen Vorrichtung sogar Stroh verarbeitet werden kann, was bisher unweigerlich bei ähnlichen Vorrichtungen zur Verstopfung führte. Bei einer vorteilhaften Ausführungsform ist die Schneckenwelle im Bereich der Staueinrichtung oder Staueinrichtungen mit einem nabenförmigen Wulst versehen, wobei dann natürlich die wellennahen Endflächen der plattenförmigen Elemente der Form dieses nabenförmigen Wulstes angepaßt sein müssen.

Eine vorteilhafte Ausführungsform zeichnet sich dadurch aus, daß die Staueinrichtung(en) zwei plattenförmige verschiebbare Elemente aufweisen. Bei einer anderen vorteilhaften Ausführungsform sind jeweils drei plattenförmige verschiebbare Elemente vorgesehen. Möglicherweise können auch noch mehr Elemente vorgesehen werden, obwohl dies zu komplizierter werdenden Vorrichtungen führt.

Die plattenförmigen Elemente können manuell elektrisch, hydraulisch oder pneumatisch verstellbar sein. Dabei kann insbesondere die Stellung der plattenförmigen verschiebbaren Elemente unter Verwendung von Verfahrensparametern geregelt werden. Die die Regelung beeinflußenden Führungsgrößen sind z. B.
. der elektrische Energieantrag (kWh/t), gemessen und geregelt über die abgegebene Motorleistung und Leistung der Anlage (t/h)
. der Behandlungsdruck, (bar) im Expander gemessen und geregelt über Drucksensoren im Expander oder
. die Behandlungstemperatur (°C), gemessen und geregelt über im Expander eingebaute Temperatursensoren.

Wenn die plattenförmigen Elemente auseinander bewegt werden, so bilden sich nicht nur Zwischenräume zwischen plattenförmigen Elementen und welle, sondern auch radial verlaufende Zwischenräume zwischen den plattenförmigen Elementen selbst. Durch entsprechende Formgebung der Platten kann dabei das Verhältnis der Spalte zwischen Welle und Platte einerseits und Platten untereinander andererseits gewählt werden. Man kann z. B. vorsehen, daß die Platten, wenn sie ganz nahe an die Welle heranbewegt sind, auch zwischen sich keine wesentlichen Zwischenräume mehr aufweisen. Andererseits kann man aber die Platten auch so ausbilden, daß dann, wenn sie ganz an die Welle heranbewegt sind, zwischen zwei Platten immer noch Zwischenräume verbleiben, die dann durch bolzenförmige Elemente (Stopschrauben) verschlossen sind. Dies hat insbesondere bei den Stauelementen, die im Bereich der Welle und nicht an der Auslaßöffnung vorgesehen sind, den Vorteil, daß bei ganz herausgefahrenen Platten hier kein Freiraum ohne irgendwelche Schikanen entsteht, in dem das Material verklumpen könnte.

Die zylinderförmigen oder bolzenförmigen Elemente zwischen den einzelnen Platten sind vorteilhafterweise auch noch verstellbar.

Eine weitere vorteilhafte Ausführungsform zeichnet sich dadurch aus, daß das Gehäuse Düsen zum Einbringen von Wasser und/oder Wasserdampf aufweist.

Die Erfindung wird im folgenden anhand von vorteilhaften Ausführungsformen unter Bezugnahme auf die beigefügten Zeichnungen beispielsweise beschrieben. Es zeigen in schematischer Darstellung:
- Fig. 1: eine Vorrichtung des Standes der Technik;
- Fig. 2 und 3: in Seitenansicht und in Stirnansicht das Ausgangsende einer erfindungsgemäßen Vorrichtung in einer ersten Stellung;
- Fig. 4 und 5: in ähnlicher Darstellung wie in den Figuren 2 und 3 das Ausgangsende in einer geschlossenen Stellung; und
- Fig. 6: in ähnlicher Darstellung wie in den Figuren 3 und 5 das Auslaßende einer anderen erfindungsgemäßen Vorrichtung.

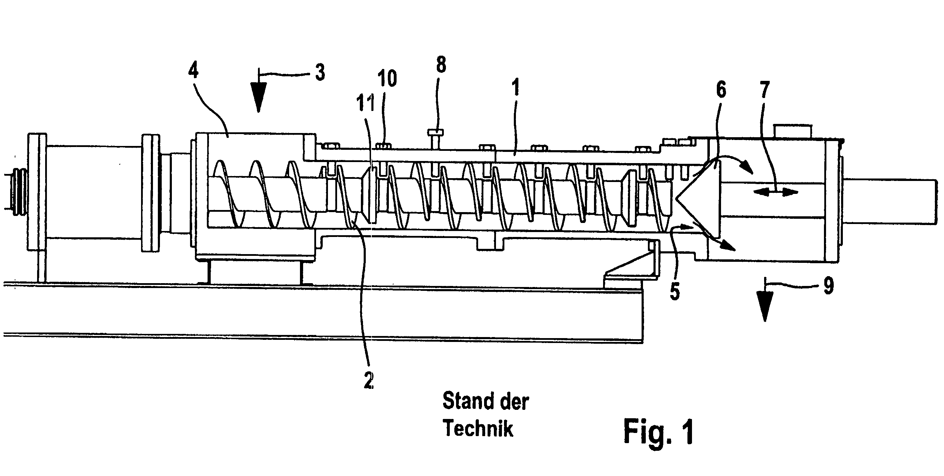

In Figur 1 ist die eingangs erwähnte Vorrichtung des Standes der Technik dargestellt. In einem Gehäuse 1 befindet sich eine Schnecke 2, die mehrfach unterteilt ist. Durch diese Schnecke 2 kann in Richtung des Pfeiles 3 in die Einlaßöffnung 4 eingegebenes Futtermittel nach rechts zur Auslaßöffnung 5 gedrückt werden, die durch einen verstellbaren Konus 6 teilweise verschlossen ist. Diese Konus kann in Richtung des Doppelpfeiles 7 nach links oder nach rechts bewegt werden. Das Material wird dabei durch Reibung und gegebenenfalls auch durch Dampf erwärmt, der durch Dampfdüsen 8 eingebracht wird. Das Material verläßt dann in Richtung des Pfeiles 9 die Vorrichtung. Die Welle wird dabei durch einen nicht gezeigten Motor angetrieben.

Zwischen einzelnen Abschnitten der Schneckenwindung 2 befinden sich bolzenförmige Schrauben 10, die die Materialbewegung behindern und dadurch zu einer Verdichtung führen. Diese Wirkung wird besonders aber durch nabenartige Wülste 11 bewirkt. Dadurch kann verhindert werden, daß das Material in Strömungsrichtung vor der Dampfdüse 8 zu locker ist, so daß der Dampf durch die Materialeingangsöffnung 4 entweicht. Statt der bolzenförmigen Elemente 10 und der Naben 11 können gemäß Figur 3 der DE 197 14 713 A auch Platten vorgesehen sein, die von einer die Materialströmung maximal behindernden Stellung, in der ihre Ebenen senkrecht zur Achse der Schnecke 2 sind, in eine Stellung gedreht werden können, in der die Plattenebenen parallel zur Achse der Schnecken 2 sind.

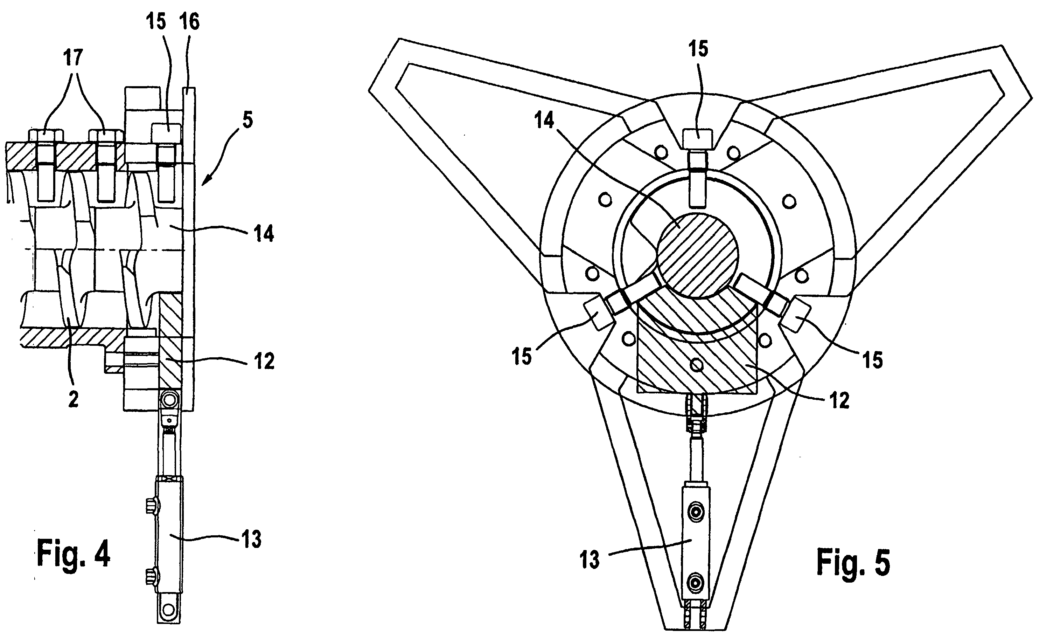

In den Figuren 2 bis 5 ist eine erste Ausführungsform der Erfindung gezeigt. Die Auslaßöffnung 5 kann dabei durch verschiebbare plattenförmige Elemente 12 im wesentlichen verschlossen werden, die in den Figuren zur besseren Verdeutlichung schraffiert dargestellt sind. In den Figuren 2 bis 5 ist dabei jeweils nur eines der plattenförmigen Elemente 12 gezeigt, von denen bei dieser Ausführungsform drei Elemente vorgesehen sind. Die plattenförmigen Elemente 12 sind in Führungen 13 gelagert und können von Hand oder elektrisch, hydraulisch oder pneumatisch verschoben werden. In der Stellung der Figuren 2 und 3 sind sie maximal herausgefahren und behindern den Austritt des Materials nicht, während sie bei der Darstellung der Figuren 4 und 5 bis nahe an die Schneckenwelle 14 herangefahren sind, die zur Verdeutlichung in den Figuren 3, 5 und 6 ebenfalls schraffiert ist. Zwischen den einzelnen plattenförmigen Elementen 13 befinden sich noch Bolzen 15, die die Zwischenräume zwischen den einzelnen plattenförmigen Elementen 12 verdecken, wenn diese plattenförmigen Elemente 12 ganz an die Schneckenwelle 14 heranbewegt sind.

In den Figuren 2 und 4 ist bei 16 noch eine Führung angedeutet, die die Druckkräfte aufnimmt, die durch das Material auf die Platten 12 ausgeübt werden. Die in den Figuren und 2 und 4 gezeigten weiteren bolzenförmigen Elemente 17 sollen den Widerstand erhöhen und dadurch einen höheren Energieeintrag ermöglichen.

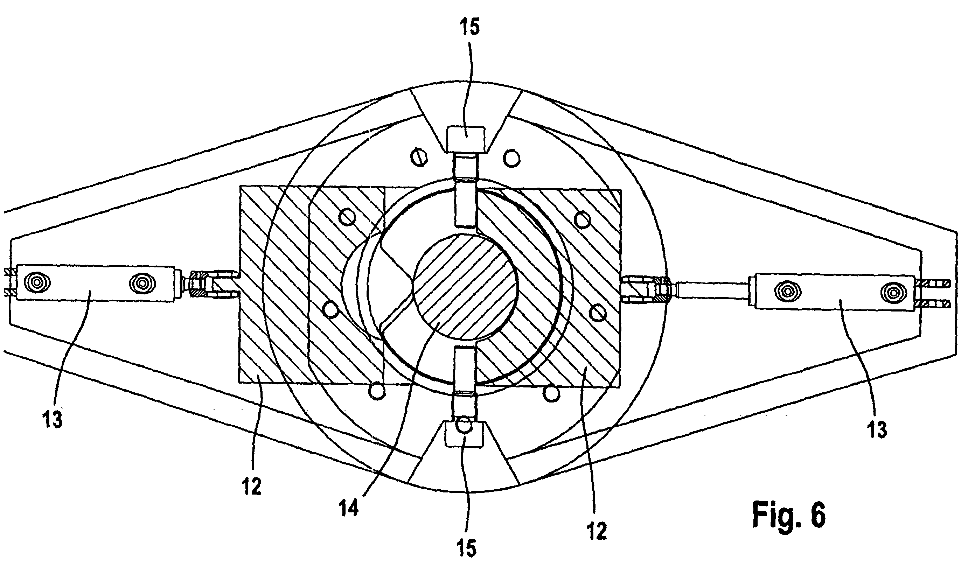

Bei der Ausführungsform der Figur 6 sind statt drei plattenförmigen Elementen 12 lediglich zwei solcher Elemente verwendet. In der Figur 6 ist dabei das linke Elemente 12 in der voll geöffneten, das rechte Element 12 in der maximal geschlossenen Stellung gezeigt.

Die erfindungsgemäße Staueinrichtung wurde im Zusammenhang mit der Auslaßöffnung beschrieben. Es versteht sich jedoch, daß entsprechende Staueinrichtungen auch im Bereich der Schneckenwelle zwischen Materialeingang und Auslaßöffnung vorgesehen sein können, um den Widerstand und damit den Energieeintrag zu erhöhen.

## Patentansprüche

1. Vorrichtung zum Konditionieren von Futtermitteln und Futtermittelkomponenten wie Ölsaaten, Ölfrüchten, Leguminosesamen, Sojabohnen, Reiskleie usw.mittels Erwärmung, so daß sie in eine für das Tier besser annehmbare und verdaubare Form gebracht werden, mit einem Gehäuse mit Materialeingang, Druckaufbau- und Entspannungszonen und einer durch Stoppbolzen unterbrochenen Schnecke, mit der das Material unter Druckaufbau gegen eine verengte Auslaßöffnung und aus dieser unter Entspannung herausgedrückt wird, wobei die Vorrichtung mit wenigstens einer plattenförmigen, verstellbaren, den Materialfluß hemmende Elemente aufweisenden Staueinrichtung versehen ist, **dadurch gekennzeichnet, daß** die plattenförmigen Elemente (12) der Staueinrichtung radial verschiebbar angeordnet sind und zur Schneckenwelle (14) gerichtete Endflächen aufweisen, die an die Form der Schneckenwelle (14) an dieser Stelle angepaßt sind.

2. Vorrichtung nach Anspruch 1, **dadurch gekennzeichnet, daß** die eine Staueinrichtung an der Auslaßöffnung (5) vorgesehen ist.

3. Vorrichtung nach Anspruch 1 oder 2, **dadurch gekennzeichnet, daß** die eine oder mehrere Staueinrichtung(en) zwischen Materialeingang (4) und Auslaßöffnung (5) vorgesehen sind.

4. Vorrichtung nach einem der Ansprüche 1 bis 3, **dadurch gekennzeichnet, daß** die Schneckenwelle (14) im Bereich der Staueinrichtung(en) mit einem nabenförmigen Wulst (11) versehen ist.

5. Vorrichtung nach einem der Ansprüche 1 bis 4, **dadurch gekennzeichnet, daß** die Staueinrichtung(en) zwei plattenförmige verschiebbare Elemente (12) aufweisen.

6. Vorrichtung nach einem der Ansprüche 1 bis 4, **dadurch gekennzeichnet, daß** die Staueinrichtung(en) drei plattenförmige verschiebbare Elemente (12) aufweisen.

7. Vorrichtung nach einem der Ansprüche 1 bis 6, **dadurch gekennzeichnet, daß** die plattenförmigen Elemente (12) manuell, elektrische, hydraulisch oder pneumatisch verstellbar sind.

8. Vorrichtung nach einem der Ansprüche 1 bis 7, **dadurch gekennzeichnet, daß** die Stellung der plattenförmigen verschiebbaren Elemente (12) unter Verwendung von Verfahrensparametern geregelt wird (kWh/t, bar, °C).

9. Vorrichtung nach einem der Ansprüche 1 bis 8, **dadurch gekennzeichnet, daß** in den Zwischenräumen zwischen plattenförmigen verschiebbaren Elementen (12) einer Staueinrichtung im wesentlichen zylinderförmige sich radial erstreckende Elemente (15) vorgesehen sind.

10. Vorrichtung nach Anspruch 9, **dadurch gekennzeichnet, daß** die zylinderförmigen Elemente (15) verstellbar sind.

11. Vorrichtung nach einem der Ansprüche 1 bis 10, **dadurch gekennzeichnet, daß** das Gehäuse (1) Düsen (8) zum Einbringen von Wasser und/oder Wasserdampf aufweist.

## Claims

1. Device for conditioning of fodder and fodder components, such as oleaginous seeds, oleaginous fruits, leguminous plant seeds, soya beans, rice bran, etc. by means of heating, so that they are brought into a form in which they are more acceptable to and better digestible by the animal, with a housing with material input, pressure build-up and relief zones and a worm interrupted by stop bolts, with which the material is squeezed out with the build up of pressure against a constricted outlet orifice and out of the latter with relief of pressure, the device being provided with at least one flow restriction device having adjustable plate-shaped elements which inhibit the material flow, **characterised in that** the plate-shaped elements (12) of the flow restriction device are arranged such that they can be displaced radially and have end faces oriented towards worm shaft (14), which end faces are adapted to the shape of the worm shaft (14) at this location.

2. Device according to Claim 1, **characterised in that** the one flow restriction device is provided at the outlet orifice (5).

3. Device according to Claim 1 or 2, **characterised in that** the one or more flow restriction device(s) are provided between material input (4) and outlet orifice (5).

4. Device according to one of Claims 1 to 3, **characterised in that** the worm shaft (14) is provided with a hub-shaped boss (11) in the region of the flow restriction device(s).

5. Device according to one of Claims 1 to 4, **characterised in that** the flow restriction device(s) have two displaceable plate-shaped elements (12).

6. Device according to one of Claims 1 to 4, **characterised in that** the flow restriction device(s) have three displaceable plate-shaped elements (12).

7. Device according to one of Claims 1 to 6, **characterised in that** the plate-shaped elements (12) can be adjusted manually, electrically, hydraulically or pneumatically.

8. Device according to one of Claims 1 to 7, **characterised in that** the adjustment of the displaceable plate-shaped elements (12) is controlled using process parameters (kWh/t, bar, °C).

9. Device according to one of Claims 1 to 8, **characterised in that** essentially cylindrical elements (15) extending radially are provided in the spaces between displaceable plate-shaped elements (12) of a flow restriction device.

10. Device according to Claim 9, **characterised in that** the cylindrical elements (15) are adjustable.

11. Device according to one of Claims 1 to 10, **characterised in that** the housing (1) has nozzles (8) for the introduction of water and/or steam.

## Revendications

1. Dispositif pour le conditionnement de fourrages et de composants de fourrage tels que des graines oléagineuses, des fruits oléagineux, des sésames de légumineux, des sojas, du son de riz, etc., par réchauffement, de sorte qu'ils sont amenés dans une forme plus acceptable et digestible pour l'animal, comprenant un boîtier avec arrivée de matière, un établissement de pression et des zones de délestage et une vis sans fin interrompue par des boulons d'arrêt, avec lequel 1 matière est comprimée avec établissement de pression contre une ouverture de sortie rétrécie et duquel elle est éjectée avec détente, le dispositif étant pourvu d'au moins un dispositif d'accumulation en forme de plaque, réglable, présentant des éléments arrêtant le flux de matière, **caractérisé en ce que** les éléments (12) en forme de plaques du dispositif d'accumulation sont disposées de façon à pouvoir coulisser radialement et présentent des surfaces d'extrémité orientées vers l'arbre de vis sans fin (14), qui sont adaptées à la forme de l'arbre de vis sans fin (14) à cet emplacement.

2. Dispositif selon la revendication 1, **caractérisé en ce qu'**il est prévu un dispositif d'accumulation sur l'ouverture de sortie (5).

3. Dispositif selon la revendication 1 ou 2, **caractérisé en ce qu'**un ou plusieurs dispositifs d'accumulation sont prévus entre l'entrée de matière (4) et l'ouverture de sortie (5).

4. Dispositif selon l'une quelconque des revendications 1 à 3, **caractérisé en ce que** la vis sans fin (14) est pourvue dans la zone du(des) dispositifs) d'accumulation d'un renflement (11) en forme de moyeu.

5. Dispositif selon l'une quelconque des revendications 1 à 4, **caractérisé en ce que** le(les) dispositif(s) d'accumulation présente(nt) deux éléments (12) coulissants en forme de plaque.

6. Dispositif selon l'une quelconque des revendications 1 à 4, **caractérisé en ce que** le(les) dispositifs) d'accumulation présente(nt) trois éléments (12) coulissants en forme de plaque.

7. Dispositif selon l'une quelconque des revendications 1 à 6, **caractérisé en ce que** les éléments (12) en forme de plaque peuvent être réglés manuellement, au niveau électrique, hydraulique ou pneumatique.

8. Dispositif selon l'une quelconque des revendications 1 à 7, **caractérisé en ce que** la position des éléments (12) coulissants en forme de plaque est réglée en utilisant des paramètres de procédé (kWh/t, bar, °C).

9. Dispositif selon l'une quelconque des revendications 1 à 8, **caractérisé en ce que** des éléments (15) s'étendant radialement et sensiblement en forme de cylindre sont prévus dans les espaces intermédiaires entre des éléments (12) coulissants en forme de plaque d'un dispositif d'accumulation.

10. Dispositif selon la revendication 9, **caractérisé en ce que** les éléments (15) en forme de cylindre sont réglables.

11. Dispositif selon l'une quelconque des revendications 1 à 10, **caractérisé en ce que** le boîtier (1) présente des buses (8) pour l'introduction d'eau et/ou de vapeur d'eau.
